Europäisches Patentamt

European Patent Office

Office européen des brevets

(19)

(11) Numéro de publication: **0 322 312**
**A1**

(12) # DEMANDE DE BREVET EUROPEEN

(21) Numéro de dépôt: 88403268.1

(22) Date de dépôt: 21.12.88

(51) Int. Cl.4: **B 65 D 65/20**

(30) Priorité: 23.12.87 FR 8718101

(43) Date de publication de la demande:
28.06.89 Bulletin 89/26

(84) Etats contractants désignés:
BE CH DE ES GB IT LI LU NL

(71) Demandeur: CONDITIONNEMENT ET INDUSTRIE S.A. (C E I S A)
Z.I. Route de Broglie BP 462
F-27304 Bernay (FR)

(72) Inventeur: Cathala, Georges
Rue de Morsan
F-27300 Bernay (FR)

Tempez, Claude Marcel
Rue Docteur Piau
F-27470 Serquigny (FR)

(74) Mandataire: Koch, Gustave et al
Cabinet PLASSERAUD 84, rue d'Amsterdam
F-75009 Paris (FR)

(54) Feuille d'emballage souple de brouillage de code à barres et lot d'articles groupés en comportant application.

(57) La feuille d'emballage (16) souple permet d'assembler des lots (10) constitués par un groupage d'articles identiques (12) susceptibles d'être également vendus à l'unité et munis chacun d'un code barres (14). La feuille est en matériau souple et transparent, ou au moins translucide, pour la majeure partie du spectre visible, ayant un coefficient de réflexion et de diffusion élevé pour la lumière infrarouge et/ou rouge.

## FIG.1.

EP 0 322 312 A1

## Description

**Feuille d'emballage souple de brouillage de code à barres et lot d'articles groupés en comportant application.**

L'invention concerne les feuilles d'emballage souple permettant notamment d'assembler des lots constitués par groupage d'articles identiques susceptibles d'être également vendus à l'unité.

A l'heure actuelle, de nombreux articles sont vendus, notamment dans les magasins de grande surface, sous forme de lots de plusieurs articles. C'est par exemple le cas de bouteilles ou de cartons de boissons. Les clients peuvent acheter le lot complet ou prendre un article séparé à l'intérieur du lot.

Il est par ailleurs courant de prévoir sur chaque article une étiquette portant un code à barres normalisé. Lors du passage aux caisses, la prise en compte s'effectue par passage de l'article sur la fenêtre d'un lecteur à balayage, utilisant généralement une diode laser comme élément d'émission. La lecture peut s'effectuer également à l'aide d un crayon à lumière ou du lecteur manuel dit "douchette". Une étiquette portant un autre code à barres peut être imprimée ou fixée sur la feuille d'emballage et correspondre au prix du lot complet : elle doit être lue seule pour prendre en compte le prix du lot.

Des considérations commerciales conduisent à grouper les lots au moyen d'une feuille de matériau transparent pour que les clients éventuels puissent voir le contenu du groupage. Mais il existe alors le risque que, lors du passage devant la fenêtre de lecture, ce soit le code d'un article individuel, et non pas le code du lot, qui est lu. Pour écarter ce risque, on a proposé des feuilles d'emballage souples et transparentes sur lesquelles est imprimé un réseau de lignes ou de points constituant des éléments perturbants brouillant la lecture. Cette solution n'est pas pleinement satisfaisante. Si le réseau d'éléments perturbants est très serré, l'aspect des articles est peu visible. En cas de réseau de lignes écartées, le risque de lecture intempestive du code d'un article subsiste lorsque le module (c'est-à-dire le plus petit élément du code à barres) est inférieur à une valeur déterminée, qui dépend du pas du réseau. Si on utilise un réseau de lignes ayant une orientation déterminée, il ne permet pas toujours de brouiller le code des articles quelle que soit l'orientation des barres de ce code.

L'invention vise à fournir une feuille d'emballage souple à brouillage de code à barres répondant mieux que celles antérieurement connues aux exigences de la pratique, notamment en ce qu'elle ne trouble que très peu la vision qu'a l'acheteur potentiel des articles et cependant garantit l'absence de lecture intempestive du code individuel des articles.

L'invention utilise pour cela le fait que les lecteurs de codes à barres fonctionnent dans la partie infrarouge proche et dans la partie rouge extrême du spectre visible, c'est-à-dire dans une zone du spectre à laquelle l'oeil est peu ou pas sensible. L'invention propose en conséquence une feuille d'emballage en matériau souple et transparent (ou au moins translucide) pour la majeure partie du spectre visible, ayant un coefficient de réflexion et/ou de diffusion, dans la masse de la pellicule, élevé pour la lumière infrarouge et/ou rouge.

On voit que la feuille d'emballage permet de brouiller le code porté par les articles individuels en conservant une translucidité homogène ; la feuille peut aussi porter des graphismes imprimés, par exemple dans un but attractif, publicitaire ou d'information et en particulier un code à barres.

Le matériau constitutif de la feuille pourra notamment être constitué en un polymère transparent ou translucide, tel que par exemple le polyéthylène, extrudé, généralement thermo-rétractable, contenant une faible concentration (généralement inférieure à 1% en poids) de particules, dispersées de façon homogène, d'un élément diffusant ou réfléchissant sélectivement l'infrarouge. La feuille peut notamment être réalisée en un produit constitué essentiellement de polymère tel que le polyéthylène auquel a été ajouté un mélange maître constitué de polymère et de poudre de métal broyé, mélangés à de l'huile minérale ou à du dioctyle phtalate. L'aluminium est particulièrement avantageux. La granulométrie de la poudre d'aluminium est adaptée à la longueur d'onde de lecture ; elle sera généralement comprise entre 7 et 10 microns, une granulométrie de 9 microns étant avantageuse. La teneur en aluminium du produit final sera généralement comprise entre 0,2 et 0,8 % en poids. Une faible teneur de colorants destinés à teinter le polyéthylène peut être ajoutée à ce dernier, par exemple pour lui donner la teinte bleutée couramment utilisée pour les emballages d'eau minérale.

L'invention propose également un lot d'articles constitué par un groupe d'articles identiques portant chacun une étiquette à code à barres et une feuille d'emballage thermorétractée sur le groupe, portant une étiquette à code à barres correspondant au lot, caractérisé en ce que la feuille est constituée en un matériau transparent ou translucide pour la majeure partie du spectre visible, ayant un coefficient de réflexion ou de diffusion élevé pour la lumière infrarouge et/ou rouge.

L'invention sera mieux comprise à la lecture de la description qui suit d'un mode particulier de réalisation donné à titre d'exemple non limitatif. La description se réfère aux dessins qui l'accompagnent, dans lesquels :

- la Figure 1 montre schématiquement un lot constitué d'un groupage de bouteilles sous pellicule de polyéthylène thermo-rétractée munie d'une étiquette portant un code à barres ;

- la Figure 2, similaire à la Figure 1, montre un groupage de cartons sous emballage suivant l'invention, dans lequel l'étiquette du lot est portée par une oreille latérale.

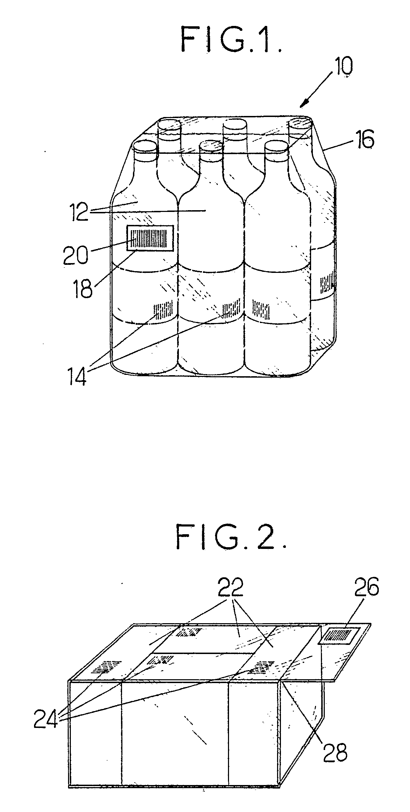

Le lot 10 montré en Figure 1 comporte six bouteilles 12 munies chacune d'une étiquette portant des indications en clair et un code à barres 14 individuel. Ces codes peuvent se trouver dans des positions variables, suivant l'orientation donnée aux bouteilles lors de l'assemblage. Le lot est constitué à l'aide d'une feuille de sur-emballage 16 thermo-rétractée, réalisée par exemple à partir d'une bande mise en place à la fardeleuse ou à la banderoleuse ou d'une gaine enfilée sur le lot, tronçonnée à la longueur convenable puis thermo-rétractée à l'air chaud. L'enveloppe porte une étiquette 18, rapportée ou imprimée, portant un code barres 20 correspondant au lot.

Conformément à l'invention, l'enveloppe 16 est constituée par une feuille de matériau transparent ou translucide contenant une faible proportion d'un produit diffusant ou réfléchissant le rayonnement infrarouge ou rouge utilisé pour la lecture des codes barres. La feuille peut notamment être à base de polyéthylène ou autre polymère contenant moins de 1% de poudre d'aluminium ayant une répartition granulométrique dont l'essentiel se place entre 7 et 10 $\mu$m. Il est particulièrement avantageux d'utiliser, pour les lecteurs utilisant les diodes laser les plus courantes dans le commerce, une granulométrie présentant un maximum vers 9 $\mu$m.

La feuille de polyéthylène thermo-rétractable peut être fabriquée par des procédés classiques, si ce n'est qu'avant extrusion on ajoute un faible pourcentage de mélange maître au polymère. Ce mélange maître comporte la poudre d'aluminium broyée et tamisée, mélangée par exemple à de l'huile minérale ou du dioctyle phtalate et du polyéthyène destiné à assurer une dispersion satisfaisante. Dans le mélange maître, l'aluminium pourra être en une proportion de l'ordre de 10%. Une proportion finale de 0,2 à 0,8 % en poids d'aluminium constitue un compromis satisfaisant entre le brouillage des codes barres 14 et la visibilité des bouteilles au travers de l'emballage. Suivant l'épaisseur donnée à la feuille 16, il sera possible d'augmenter ou de diminuer légèrement la teneur en aluminium, éventuellement au-delà des pourcentages donnés plus haut.

Dans l'exemple illustré en Figure 2, l'enveloppe est destinée à regrouper en un seul lot quatre cartons 22 avec une disposition telle que les codes barres 24 de ces divers cartons ne sont pas dans la même orientation. L'étiquette 26 portant le code barres du haut est cette fois fixée à un prolongement externe constitué par une double épaisseur de feuille après soudage en 28 d'un sac de réception en un matériau qui peut être du même type que celui défini ci-dessus, ou imprimée sur ce prolongement.

L'invention est susceptible encore de nombreuses autres variantes de réalisation et il doit être entendu que la portée du présent brevet s'étend à toute variante restant dans le cadre des équivalences.

**Revendications**

1. Feuille d'emballage souple permettant d'assembler des lots constitués par un groupage d'articles identiques (12, 22) susceptibles d'être également vendus à l'unité et munis chacun d'un code barres (14, 24), caractérisée en ce que la feuille est en matériau souple et transparent, ou au moins translucide, pour la majeure partie du spectre visible, ayant un coefficient de réflexion et de diffusion élevé pour la lumière infrarouge et/ou rouge.

2. Feuille selon la revendication 1, caractérisée en ce que le matériau constitutif de la feuille est un polymère transparent ou translucide, tel que le polyéthylène, contenant une faible concentration de particules, dispersées de façon homogène, d'un élément diffusant ou réfléchissant sélectivement l'infrarouge.

3. Feuille selon la revendication 2, caractérisée en ce que l'élément diffusant ou réfléchissant est constitué par de la poudre métallique.

4. Feuille selon la revendication 3, caractérisée en ce que la poudre est constituée d aluminium et a une granulométrie comprise pour l'essentiel entre 6 et 10 $\mu$m.

5. Feuille selon la revendication 3 ou 4, caractérisée en ce que la teneur en métal du produit final est comprise entre 0,2 et 0,8 % en poids.

6. Feuille selon l'une quelconque des revendications précédentes, caractérisée en ce qu'elle contient un faible pourcentage de colorant.

7. Feuille selon l'une quelconque des revendications précédentes, caractérisée en ce que la feuille est réalisée à partir d'un produit constitué essentiellement de polymère tel que le polyéthylène auquel a été ajouté un mélange maître de polymère et de poudre de métal broyé, mélangés à de l'huile minérale ou à du dioctyle phtalate.

8. Lot d'articles constitué par un groupe d'articles identiques (12, 22) portant chacun une étiquette à code à barres (20, 24) et une feuille d'emballage thermo-rétractée sur le groupe, portant une étiquette à code à barres (20, 26) correspondant au lot, caractérisé en ce que la feuille (16) est constituée en un matériau transparent ou translucide pour la majeure partie du spectre visible, ayant un coefficient de réflexion ou de diffusion dans la masse élevé pour la lumière infrarouge et/ou rouge.

# FIG.1.

# FIG.2.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 219 590  (BLACHON & CIE) <br> * revendication 1; figures 5,6 * <br> --- | 1,8 | B 65 D  65/20 |
| A | DE-A-3 020 605  (FUJI PHOTO FILM CO., LTD.) <br> * page 7, ligne 31 - page 8, ligne 21; revendications 1,5,9-11 * <br> --- | 1-4,6,7 | |
| A | GB-A-  886 761  (J. SCHINDLER & CO) <br> * revendications 1,6 * <br> ----- | 1,3 | |

DOMAINES TECHNIQUES
RECHERCHES (Int. Cl.4)

B 65 D  65/00
G 06 K  19/00

Le présent rapport a été établi pour toutes les revendications

| Lieu de la recherche | Date d'achèvement de la recherche | Examinateur |
|---|---|---|
| BERLIN | 10-03-1989 | SIMON J J P |